# EUROPEAN PATENT SPECIFICATION

(11) **EP 3 569 304 B1**
(45) Date of publication and mention of the grant of the patent: **20.10.2021**
(21) Application number: 17892492.4
(22) Date of filing: 12.05.2017
(51) Int. Cl.: B01J 13/00, C01B 33/158, C04B 30/02

(54) **PROCESS OF PREPARING A SUPERHYDROPHOBIC SILICON-ALUMINUM-ZIRCONIUM COMPOSITE MATERIAL**
VERFAHREN ZUR HERSTELLUNG EINES SUPERHYDROPHOBEN SILICIUM-ALUMINIUM-ZIRKON-VERBUNDSTOFFMATERIALS
PROCÉDÉ DE PRÉPARATION D'UN MATÉRIAU COMPOSITE SUPER-HYDROPHOBE À BASE DE SILICIUM-ALUMINIUM-ZIRCONIUM

(30) Priority: 18.01.2017 CN 201710034626
(43) Date of publication of application: 20.11.2019
(73) Proprietor: Xiangshui Huaxia Advanced Material Technology Devlopment Co., Ltd., Jiangshu 224600 (CN)
(72) Inventor: DAI, Jinzhou, Shenzhen Guangdong 518057 (CN); CHEN, Xiaoxing, Shenzhen Guangdong 518057 (CN); LIU, Xiaoming, Shenzhen Guangdong 518057 (CN); KE, Zhiyong, Shenzhen Guangdong 518057 (CN)
(74) Representative: Petculescu, Ana-Maria
(86) International application number: PCT/CN2017/084049
(87) International publication number: WO 2018/133260

(56) References cited:
- WO-A1-2014/184393
- CN-A- 101 254 449
- CN-A- 101 698 592
- CN-A- 104 556 968
- CN-A- 105 621 942
- CN-A- 106 187 069
- CN-A- 106 298 019
- CN-B- 103 159 454

## Description

### Technical Field

The present disclosure belongs to the technical field of materials, and in particular relates to a superhydrophobic silicon-aluminum-zirconium composite material and a preparation method thereof.

### Background

Aerogel is a porous solid material highly aggregated by nano-sized particles, having a continuous three-dimensional network structure and a porosity of more than 90%. Aerogel is a lightweight super-insulating material. Structural characteristics of aerogel make it have special properties in mechanics, thermology, acoustics, optics, electricity, etc. Currently, silica aerogels are widely studied and applied. However, since the silica aerogels do not have a blocking ability for infrared rays having a wavelength band ranging from 2 µm to 8 µm, at a high temperature, thermal radiant energy of this wavelength band will almost entirely pass through the aerogel. Meanwhile, at the high temperature, the silica aerogel nanopores are easily collapsed, the aerogel structure tends to densification, and the thermal insulation performance is lowered. Alumina aerogel has a high value of temperature resistance, and can be a satisfactory high-temperature thermal insulation material. However, a crystal transformation occurs at high temperatures, resulting in a structural collapse and a structural heat shrinkage. Based on this, the aerogel is compounded to form a bi-component structure or a multi-component structure to improve performance to meet the demands for high efficiency and lightweight thermal insulation materials in aviation, aerospace and other industries. Silicon-aluminum aerogel solves the shortcoming of low effective temperature of aerogels, but a thermal conductivity is still high, a hydrophobicity is poor, a shrinkage is large and a cost is high. For example, in patent 201010294770.3, the thermal conductivity at a high temperature is still high, the combination of aerogel and fiber is unstable, and the powder is easy to fall off. Generally, when used at 1000°C, the heat radiation cannot be neglected. In order to further reduce the thermal conductivity of the aerogel composite material under a high temperature condition and enhance the combination of aerogel and fiber, a zirconia component is added to the aerogel and the inorganic fiber material is pretreated. According to the performance requirements of the product, the corresponding raw materials can be selected. Supercritical drying, atmospheric drying or freeze-drying can be used as a drying method. At present, a preparation of alumina-zirconia-silica tri-component aerogel has been reported, however, the produced aerogel shrinks greatly, the structure remains unstable at high temperatures, the preparation period is more than 3 days, and the preparation cost is high, which is not conducive to popularization and application. Moreover, the simple aerogel structure has the disadvantages of poor mechanical properties, such as low strength, high brittleness and the like.

Following documents show a super-hydrophobic material and an aerogel material:
CN 103 159 454 B (Dongtai Energy Saving Refractory) published on 25 December 2013 discloses a composite super thermal insulation material comprising silicon dioxide aerogel, alumina micro powder, zirconium oxide fibers and opacifying agent of titanium dioxide.
CN 106 187 069 A (Univ Tianjin) published on 07 December 2016 discloses a preparation method of super-hydrophobic high-strength light heat-barrier material with zirconium alkoxide and siloxanes.
CN 101 698 592 A (Aerospace Research Institute of Special Materials & Processing Technol) published on 28 April 2010 discloses a silicon-aluminium aerogel composite material with good mechanical properties and low thermal conductivity and a preparation method thereof.

None of the above-mentioned documents discloses a solution according to the present invention.

### Summary

The invention is defined by the present claims 1 to 7. In view of the above-mentioned technical problems, the present disclosure discloses but does not claim a superhydrophobic silicon-aluminum-zirconium composite material. The prepared silicon-aluminum-zirconium aerogel composite material has a low vibration mass loss rate and a stable structure at a high temperature.

In this regard, the technical solution adopted by the present disclosure is as follows.

A preparation method for a superhydrophobic silicon-aluminum-zirconium composite material having a measurement of the water droplet contact angle greater than 150°, the composite material comprising a silicon-aluminum-zirconium aerogel and a fiber material, wherein components of the silicon-aluminum-zirconium aerogel and mass percentages of the components are as follows: SiO2 30%-95%, Al2O3 5%-70%, and ZrO2 having a mass percentage of greater than 0 and not greater than 10% , wherein the superhydrophobic silicon-aluminum-zirconium composite material is prepared by the following steps:
step S1: preparing an aluminium oxide sol, mixing an aluminum source, ethanol, deionized water and stirring uniformly to form a colorless transparent solution, i.e., the aluminium oxide sol;
step S2: preparing a silicon oxide-zirconium oxide sol, mixing a silicon source comprising at least one of hexamethyldisilazane, trimethylchlorosilane, and fluorosilane, a zirconium source, ethanol, and deionized water, and sufficiently stirring to form a colorless transparent solution, i.e., the silicon oxide-zirconium oxide sol;
step S3: mixing the aluminium oxide sol in step S1 with the silicon oxide-zirconium oxide sol in step S2, adding propylene oxide, stirring for 30 to 60 minutes, and putting aside to obtain a silicon-aluminum-zirconium aerogel;
step S4: performing a surface pretreatment on a fiber material, and then impregnating the fiber material into the silicon-aluminum-zirconium aerogel, and gelatinizing a silicon-aluminum-zirconium composite sol in the mixture at 50-80°C to obtain a silicon-aluminum-zirconium composite gel;
step S5: ageing at 20-30°C for 20-30 hours, and replacing with anhydrous ethanol, removing a reaction waste liquid, and then putting into a high-pressure container for drying with ethanol as a drying medium at a drying temperature of 240°C-280°C, to obtain the superhydrophobic silicon-aluminum-zirconium composite material. Wherein, the drying temperature is preferably 250°C.

Preferably, the fiber material is at least one of aluminum silicate cotton, aluminium oxide fiber, carbon fiber, silicon carbide fiber or silicon carbonitride fiber

Preferably, the aluminum source is at least one of aluminum salts such as aluminum sec-butoxide, aluminum nitrate or aluminum sulfate, and aluminum acetylacetonate.

Preferably, the silicon source further includes at least one of ethyl orthosilicate, silica sol, and sodium silicate. That is, the silicon source can be one type, or a plurality of types, if only one type silicon source is included, the silicon source must be a silicon source with a certain hydrophobic group, such as hexamethyldisilazane, trimethylchlorosilane, fluorosilane, etc. If there are a plurality of silicon sources, one of the plurality of silicon sources should be the silicon source with hydrophobic group as described above, and the other silicon sources can be silicon sources without hydrophobic groups such as ethyl orthosilicate, silica sol, sodium silicate solution and the like.

Preferably, the zirconium source is zirconium oxide or zirconium chloride; the zirconium oxide has a particle diameter of 10-100 nm. There are a nano-zirconium oxide powder addition method and a solution addition method. When the nano- zirconium oxide powder addition method is used, an ultrasonic dispersion is required for 10-60 minutes. The solution addition method is to form a solution by dissolving a zirconium source such as zirconium chloride in water or to form a sol by a sol-gel method.

Preferably, in step S4, the surface pretreatment on the fiber material is realized by the following steps: immersing the fiber material in a hydrochloric acid solution, ultrasonically stirring for 0.2-1 hour, taking out, rinsing, ageing at 100-120°C for 1-5 hours, and then, immersing in a silane coupling agent treatment solution, ultrasonically stirring for 0.5-2 hours, and then performing a heat treatment at 100-120°C for 1-5 hours, cooling at room temperature for use.

Preferably, a concentration of the hydrochloric acid is 0.3-2 mol/L.

Disclosed but not claimed is a method of preparing the superhydrophobic silicon-aluminum-zirconium composite material according to any of the above, which includes the following steps:
step S1: preparing an aluminium oxide sol, mixing an aluminum source, ethanol, deionized water and stirring uniformly to form a colorless transparent solution, i.e., the aluminium oxide sol;
step S2: preparing a silicon oxide-zirconium oxide sol, mixing a silicon source, a zirconium source, ethanol, and deionized water, and sufficiently stirring to form a colorless transparent solution, i.e., the silicon oxide-zirconium oxide sol;
step S3: mixing the aluminium oxide sol in step S1 with the silicon oxide-zirconium oxide sol in step S2, adding propylene oxide, stirring for 30 to 60 minutes, and putting aside to obtain a silicon-aluminum-zirconium aerogel;
step S4: performing a surface pretreatment on a fiber material, and then impregnating the fiber material into the silicon-aluminum-zirconium aerogel, and gelatinizing a silicon-aluminum-zirconium composite sol in the mixture at 50-80°C to obtain a silicon-aluminum-zirconium composite gel;
step S5: ageing at 20-30°C for 20-30 hours, and replacing with anhydrous ethanol, removing a reaction waste liquid, and then putting into a high-pressure container for drying with ethanol as a drying medium at a drying temperature of 240°C-280°C, to obtain the superhydrophobic silicon-aluminum-zirconium composite material. Wherein, the drying temperature is preferably 250°C.

As a further improvement of the present disclosure, the aluminum source is at least one of aluminum salts such as aluminum sec-butoxide, aluminum nitrate or aluminum sulfate, and aluminum acetylacetonate.

As a further improvement of the present disclosure, the silicon source further includes at least one of ethyl orthosilicate, silica sol, and sodium silicate.

As a further improvement of the present disclosure, the zirconium source is zirconium oxide or zirconium chloride.

As a further improvement of the present disclosure, the zirconium oxide has a particle diameter of 10-100 nm.

As a further improvement of the present disclosure, in step S4, the surface pretreatment on the fiber material is realized by the following steps: immersing the fiber material in a hydrochloric acid solution, ultrasonically stirring for 0.2-1 hour, taking out, rinsing, ageing at 100-120°C for 1-5 hours, and then, immersing in a silane coupling agent treatment solution, ultrasonically stirring for 0.5-2 hours, and then performing a heat treatment at 100-120°C for 1-5 hours, cooling at room temperature for use.

As a further improvement of the present disclosure, a concentration of the hydrochloric acid is 0.3-2 mol/L.

Compared with the prior art, the advantages of the present disclosure are as follows:
The silicon-aluminum-zirconium aerogel composite material prepared by the technical solution of the present disclosure has low vibration mass loss rate, and stable structure at high temperatures. Moreover, the process is simple, easily controlled, and has low cost.

In this technical solution, attention has been paid to raw materials, namely, orthosilicate ester, silica sol, sodium silicate product, etc. is used as silicon sources, aluminum salt or other aluminum compounds is used as aluminum sources, and zirconium is introduced, to prepare a sol through a multi-step sol-gel method; and the sol and the fiber are subjected to a rapid composite and a supercritical drying to obtain the superhydrophobic silicon-aluminum-zirconium composite material. The thermal conductivity at room temperature of the material is as low as 0.015 W/m·K, the vibration mass loss rate is as low as 0.2%, and the thermal conductivity at 1000°C can be as low as 0.070 W/ m·K. When the composite material is placed at 1400°C for 48 hours, the thermal conductivity of the composite material does not change. The contact angle of the composite material is greater than 150°. The composite material maintains a good superhydrophobic state below 300°C. Moreover, the superhydrophobic film layer has good wear resistance and mechanical resistance, and the hydrophobicity and thermal conductivity of the composite material have not changed after 20000 friction tests.

### Brief Description of the Drawings

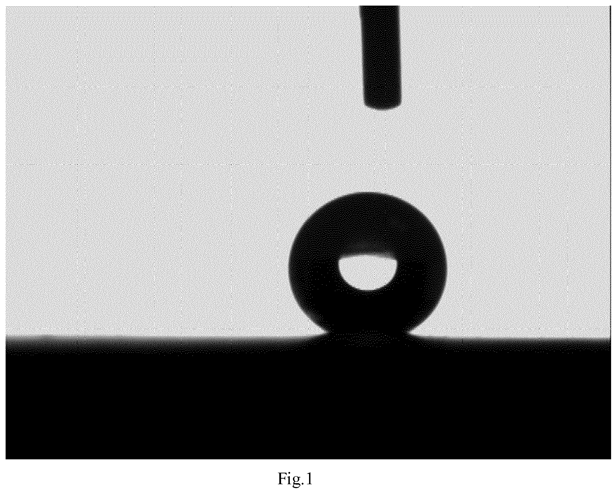

Fig. 1 is a graph showing a hydrophobicity test of a silicon-aluminum-zirconium aerogel composite material according to embodiment 1 of the present disclosure.

### Detailed Description of the Embodiments

The preferred embodiments of the present disclosure are further described in detail below.
Embodiment 1 The SiO₂-Al₂O₃-ZrO₂ aerogel composite material was prepared by the following steps:
   (1) preparation of aluminium oxide sol: aluminum sulfate, ethanol, and deionized water having a molar ratio of 2:5:8 were weighed and thoroughly stirred at normal temperature to form a colorless transparent solution;
   (2) silicon oxide-zirconium oxide sol: hexamethyldisilazane, zirconium chloride, ethanol, and deionized water having a molar ratio of 8:0.5:5:8 were weighed and thoroughly stirred at normal temperature to form a colorless transparent solution;
   (3) preparation of a tri-component sol: the above two sols were mixed, wherein a mass ratio of the silicon oxide in the composite aerogel to the silicon-aluminum-zirconium aerogel was 80%, a certain amount of propylene oxide was added, stirred for 45 minutes, and put aside to obtain a tri-component sol;
   (4) the silicon-aluminum-zirconium sol immersed in a fiber
      the silicon-aluminum-zirconium composite sol was immersed in a pretreated aluminium oxide fiber, and the mixture was placed in an environment of 60°C to gelatinize the silicon-aluminum-zirconium composite sol in the mixture to obtain a silicon-aluminum-zirconium composite gel;
   (5) ageing
      the ageing was performed at 25°C for 24 hours, and a replacement was carried out with anhydrous ethanol to remove a reaction waste liquid;
   (6) supercritical drying
      the obtained aerogel composite material was placed in an autoclave and dried with ethanol as a drying medium at 250°C for a certain period of time to obtain the SiO₂-Al₂O₃-ZrO₂ aerogel composite material.

   The prepared silicon-aluminum-zirconium aerogel composite material has a temperature resistance of 1300°C, a thermal conductivity of 0.019 W/m·K at room temperature, and a contact angle of 156°, indicating that it is superhydrophobic, a vibration mass loss rate of 0.3%, and a linear shrinkage of only 4%. A graph of a hydrophobicity test of the silicon-aluminum-zirconium aerogel composite material of the present embodiment is shown in Fig. 1. The contact angle of the composite material is greater than 150°, which shows that it has a good hydrophobic property.
Embodiment 2 The SiO₂-Al₂O₃-ZrO₂ aerogel composite material was prepared by the following steps:
   (1) preparation of aluminium oxide sol: aluminum sec-butoxide, ethanol, and deionized water having a molar ratio of 1:6:8 were weighed and thoroughly stirred at normal temperature to form a colorless transparent solution;
   (2) silicon oxide-zirconium oxide sol: hexamethyldisilazane, zirconium chloride, ethanol, and deionized water having a molar ratio of 8:1:7:8 were weighed and thoroughly stirred at normal temperature to form a colorless transparent solution;
   (3) preparation of a tri-component sol: the above two sols were mixed, wherein a mass ratio of the silicon oxide in the composite aerogel to the silicon-aluminum-zirconium aerogel was 90%, a certain amount of propylene oxide was added, stirred for 45 minutes, and put aside to obtain a tri-component sol;
   (4) the silicon-aluminum-zirconium sol immersed in a fiber
      the silicon-aluminum-zirconium composite sol was immersed in a pretreated aluminium oxide fiber, and the mixture was placed in an environment of 60°C to gelatinize the silicon-aluminum-zirconium composite sol in the mixture to obtain a silicon-aluminum-zirconium composite gel;
   (5) ageing and surface modification
      the ageing was performed at 25°C for 20 hours, and a replacement was carried out with anhydrous ethanol to remove a reaction waste liquid;
   (6) supercritical drying
      the obtained aerogel composite material was placed in an autoclave and dried with ethanol as a drying medium at 270°C for a certain period of time to obtain the SiO₂-Al₂O₃-ZrO₂ aerogel composite material.

   The prepared silicon-aluminum-zirconium aerogel composite material has a temperature resistance of 1350°C, a thermal conductivity of 0.019 W/m·K at room temperature, a vibration mass loss rate of 0.2%, and a linear shrinkage of only 5%.
Embodiment 3 The SiO₂-Al₂O₃-ZrO₂ aerogel composite material was prepared by the following steps:
   (1) preparation of aluminium oxide sol: aluminum sec-butoxide, ethanol, and deionized water having a molar ratio of 1:5:8 were weighed, and thoroughly stirred at normal temperature to form a colorless transparent solution;
   (2) silicon oxide-zirconium oxide sol: ethyl orthosilicate, trimethylchlorosilane, zirconium chloride, ethanol, and deionized water having a molar ratio of 3:5:0.5:6:10 were weighed, and thoroughly stirred at normal temperature to form a colorless transparent solution;
   (3) preparation of a tri-component sol: the above two sols were mixed, wherein a mass ratio of the silicon oxide in the composite aerogel to the silicon-aluminum-zirconium aerogel was 70%, a certain amount of propylene oxide was added, stirred for 60 minutes, and put aside to obtain a tri-component sol;
   (4) the silicon-aluminum-zirconium sol immersed in a fiber
      the silicon-aluminum-zirconium composite sol was immersed in a pretreated silicon carbide fiber, and the mixture was placed in an environment of 60°C to gelatinize the silicon-aluminum-zirconium composite sol in the mixture to obtain a silicon-aluminum-zirconium composite gel;
   (5) ageing
      the ageing was performed at 25°C for 20 hours, and a replacement was carried out with anhydrous ethanol to remove a reaction waste liquid;
   (6) supercritical drying
      the obtained aerogel composite material was placed in an autoclave and dried with ethanol as a drying medium at 270°C for a certain period of time to obtain the SiO₂-Al₂O₃-ZrO₂ aerogel composite material.

   The prepared silicon-aluminum-zirconium aerogel composite material has a temperature resistance of 1200°C, a thermal conductivity of 0.018 W/m·K at room temperature, a vibration mass loss rate of 0.3%, and a linear shrinkage of only 4.5%.
Embodiment 4 The SiO₂-Al₂O₃-ZrO₂ aerogel composite material was prepared by the following steps:
   (1) preparation of aluminium oxide sol: aluminum sec-butoxide, ethanol, and deionized water having a molar ratio of 0.5:5:8 were weighed, and thoroughly stirred at normal temperature to form a colorless transparent solution;
   (2) silicon oxide-zirconium oxide sol: ethyl orthosilicate, trimethylchlorosilane, nano-zirconium oxide, ethanol, and deionized water having a molar ratio of 5:3:0.5:6:12 were weighed, thoroughly stirred, and ultrasonically stirred for 30 minutes to form a solution;
   (3) preparation of a tri-component sol: the above two sols were mixed, wherein a mass ratio of the silicon oxide in the composite aerogel to the silicon-aluminum-zirconium aerogel was 60%, a certain amount of propylene oxide was added, stirred for 45 minutes, and put aside to obtain a tri-component sol;
   (4) the silicon-aluminum-zirconium sol immersed in a fiber
      the silicon-aluminum-zirconium composite sol was immersed in a pretreated silicon carbide fiber, and the mixture was placed in an environment of 60°C to gelatinize the silicon-aluminum-zirconium composite sol in the mixture to obtain a silicon-aluminum-zirconium composite gel;
   (5) ageing
      the ageing was performed at 25°C for 20 hours, and a replacement was carried out with anhydrous ethanol to remove a reaction waste liquid;
   (6) supercritical drying
      the obtained aerogel composite material was placed in an autoclave and dried with ethanol as a drying medium at 270°C for a certain period of time to obtain the SiO₂-Al₂O₃-ZrO₂ aerogel composite material.

   The prepared silicon-aluminum-zirconium aerogel composite material has a temperature resistance of 1150°C, a thermal conductivity of 0.015 W/m·K at room temperature, and a contact angle of 158°, indicating that it is superhydrophobic, a vibration mass loss rate of 0.2%, and a linear shrinkage of only 5%.

### Comparative embodiment 1

The SiO₂-Al₂O₃ aerogel composite material was prepared by the following steps:
(1) preparation of aluminium oxide sol: aluminum sec-butoxide, ethanol, and deionized water having a molar ratio of 1:5:8 were weighed, and thoroughly stirred at normal temperature to form a colorless transparent solution;
(2) silicon oxide-zirconium oxide sol: ethyl orthosilicate, zirconium chloride, ethanol, and deionized water having a molar ratio of 8:0:5:10 were weighed, and thoroughly stirred at normal temperature to form a colorless transparent solution;
(3) preparation of a tri-component sol: the above two sols were mixed, wherein a mass ratio of the silicon oxide in the composite aerogel to the silicon-aluminum-zirconium aerogel was 80%, a certain amount of propylene oxide was added, stirred for 45 minutes, and put aside to obtain a tri-component sol;
(4) the silicon-aluminum-zirconium sol immersed in a fiber
   the silicon-aluminum-zirconium composite sol was immersed in a untreated silicon carbide fiber, and the mixture was placed in an environment of 60°C to gelatinize the silicon-aluminum-zirconium composite sol in the mixture to obtain a silicon-aluminum-zirconium composite gel;
(5) ageing
   the ageing was performed at 25°C for 20 hours, and a replacement was carried out with anhydrous ethanol to remove a reaction waste liquid;
(6) supercritical drying
   the obtained aerogel composite material was placed in an autoclave and dried with ethanol as a drying medium at 270°C for a certain period of time to obtain a SiO₂-Al₂O₃-ZrO₂ aerogel composite material.

The prepared silicon-aluminum-zirconium aerogel composite material has a temperature resistance of 1100°C, a thermal conductivity of 0.032 W/m·K at room temperature, and a contact angle of 85°, indicating that it is hydrophilic, a linear shrinkage of only 10%, and a vibration mass loss rate of 1.5%. Compared to embodiment 3, the performance is relatively poor.

The above is a further detailed description of the present disclosure in connection with the specific preferred embodiments, and the specific embodiments of the present disclosure are not limited to the description. For those of ordinary skill in the art, several simple deductions or substitutions can be made without departing from the inventive concept of the present disclosure, which should be regarded as belonging to the protective scope of the present disclosure.

## Claims

1. A method of preparing a superhydrophobic silicon-aluminum-zirconium composite material having a measurement of the water droplet contact angle greater than 150° the composite material comprising a silicon-aluminum-zirconium aerogel and a fiber material, wherein components of the silicon-aluminum-zirconium aerogel and mass percentages of the components are as follows: SiO₂ 30%-95%, Al₂O₃ 5%-70%, and ZrO2 having a mass percentage of greater than 0 and not greater than 10%, **characterized in that** the method comprises the following steps:
step S 1: preparing an aluminium oxide sol, mixing an aluminum source, ethanol, deionized water and stirring uniformly to form a colorless transparent solution, i.e., the aluminium oxide sol;
step S2: preparing a silicon oxide-zirconium oxide sol, mixing a silicon source comprising at least one of hexamethyldisilazane, trimethylchlorosilane, and fluorosilane, a zirconium source, ethanol, and deionized water, and sufficiently stirring to form a colorless transparent solution, i.e., the silicon oxide-zirconium oxide sol;
step S3: mixing the aluminium oxide sol in step S1 with the silicon oxide-zirconium oxide sol in step S2, adding propylene oxide, stirring for 30 to 60 minutes, and putting aside to obtain a silicon-aluminum-zirconium aerogel;
step S4: performing a surface pretreatment on the fiber material, and then impregnating the fiber material into the silicon-aluminum-zirconium aerogel, and gelatinizing the silicon-aluminum-zirconium composite sol in the mixture at 50-80°C to obtain a silicon-aluminum-zirconium composite gel;
step S5: ageing at 20-30°C for 20-30 hours, and replacing with anhydrous ethanol, removing a reaction waste liquid, and then putting into a high-pressure container and drying with ethanol as a drying medium at a drying temperature of 240°C-280°C, to obtain the silicon-aluminum-zirconium composite material.

2. The method according to claim 1, wherein the fiber material in step S4 is at least one of aluminum silicate cotton, aluminium oxide fiber, carbon fiber, silicon carbide fiber or silicon carbonitride fiber

3. The method according to claim 1, **characterized in that** the aluminum source is at least one of aluminum salts such as aluminum sec-butoxide, aluminum nitrate or aluminum sulfate, and aluminum acetylacetonate.

4. The method according to claim 1, **characterized in that** the silicon source further comprises at least one of ethyl orthosilicate, silica sol, and sodium silicate.

5. The method according to claim 1, **characterized in that** the zirconium source is zirconium oxide or zirconium chloride.

6. The method according to claim 1, **characterized in that** in step S4, the surface pretreatment on the fiber material is realized by the following steps: immersing the fiber material in a hydrochloric acid solution, ultrasonically stirring for 0.2-1 hour, taking out, rinsing, ageing at 100-120°C for 1-5 hours, and then, immersing in a silane coupling agent treatment solution, ultrasonically stirring for 0.5-2 hours, and then performing a heat treatment at 100-120°C for 1-5 hours, cooling at room temperature for use.

7. The method according to claim 6, **characterized in that** a concentration of the hydrochloric acid is 0.3-2 mol/L.

## Patentansprüche

1. Verfahren zum Herstellen eines superhydrophoben
Silicium-Aluminium-Zirconium-Verbundmaterials mit einer Abmessung des Wassertropfenkontaktwinkels von über 150°, wobei das Verbundmaterial ein Silicium-Aluminium-Zirconium-Aerogel und ein Fasermaterial umfasst, wobei Bestandteile des Silicium-Aluminium-Zirconium-Aerogels und Massenanteile der Bestandteile wie folgt sind: SiO₂ 30%-95%, Al₂O₃ 5%-70% und ZrO₂ mit einem Massenanteil größer als 0 und nicht größer als 10%, **dadurch gekennzeichnet, dass** das Verfahren die folgenden Schritte umfasst:
Schritt S1: Herstellen eines Aluminiumoxidsols durch Mischen einer Aluminiumquelle, Ethanol, entionisierten Wassers und gleichmäßiges Rühren zum Bilden einer farblosen transparenten Lösung, also des Aluminiumoxidsols;
Schritt S2: Herstellen eines Siliciumoxid-Zirconiumoxid-Sols durch Mischen einer Siliciumquelle, umfassend wenigstens eins von Hexamethyldisilazan, Trimethylchlorsilan und Fluorsilan, einer Zirconiumquelle, Ethanol und entionisierten Wassers, und ausreichendes Rühren zum Bilden einer farblosen transparenten Lösung, d. h. des Siliciumoxid-Zirconiumoxid-Sols;
Schritt S3: Mischen des Aluminiumoxidsols von Schritt S1 mit dem Siliciumoxid-Zirconiumoxid-Sol von Schritt S2, Zusetzen von Propylenoxid, Rühren für 30 bis 60 Minuten und Ruhenlassen, um ein Silicium-Aluminium-Zirconiumoxid-Aerogel zu erlangen;
Schritt S4: Durchführen einer Oberflächenvorbehandlung an dem Fasermaterial und dann Imprägnieren des Fasermaterials in das Silicium-Aluminium-Zirconiumoxid-Aerogel und Gelieren des Silicium-Aluminium-Zirconiumoxid-Verbundsols in dem Gemisch bei 50-80°C, um ein Silicium-Aluminium-Zirconiumoxid-Verbundgel zu erlangen;
Schritt S5: Alternlassen bei 20-30°C für 20-30 Stunden und Ersetzen von wasserfreiem Ethanol, Entfernen einer Reaktionsabfallflüssigkeit und Geben in einen Hochdruckbehälter und Trocknen mit Ethanol als Trocknungsmittel bei einer Trocknungstemperatur von 240-280°C, um das Silicium-Aluminium-Zirconiumoxid-Verbundmaterial zu erlangen.

2. Verfahren nach Anspruch 1, wobei das Fasermaterial von Schritt S4 wenigstens eins von Aluminiumsilicat-Baumwolle, Aluminiumoxidfaser, Kohlenstofffaser, Siliciumcarbidfaser oder Siliciumcarbonitridfaser ist.

3. Verfahren nach Anspruch 1, **dadurch gekennzeichnet, dass** die Aluminiumquelle wenigstens eins von Aluminiumsalzen wie etwa Aluminium-sec-butoxid, Aluminiumnitrat oder Aluminiumsulfat, und Aluminiumacetylacetonat ist.

4. Verfahren nach Anspruch 1, **dadurch gekennzeichnet, dass** die Silicumquelle ferner wenigstens eins von Ethylorthosilicat, Silicasol und Natriumsilicat umfasst.

5. Verfahren nach Anspruch 1, **dadurch gekennzeichnet, dass** die Zirconiumsource Zirconiumoxid oder Zirconiumchlorid ist.

6. Verfahren nach Anspruch 1, **dadurch gekennzeichnet, dass** in Schritt S4 die Oberflächenvorbehandlung des Fasermaterials durch folgende Schritte erfolgt: Eintauchen des Fasermaterials in eine Salzsäurelösung, Ultraschallrühren für 0,2-1 Stunde, Entnehmen, Spülen, Alternlassen bei 100-120°C für 1-5 Stunden, dann Eintauchen in eine Silankopplerbehandlungslösung, Ultraschallrühren für 0,5-2 Stunden, dann Durchführen einer Wärmebehandlung bei 100-120°C für 1-5 Stunden, Abkühlen bei Raumtemperatur zur Verwendung.

7. Verfahren nach Anspruch 6, **dadurch gekennzeichnet, dass** eine Konzentration der Salzsäure 0,3-2 mol/l beträgt.

## Revendications

1. Un procédé de préparation de matériau composite superhydrophobe de silicium-aluminium-zirconium doté d'une mesure d'angle de contact de gouttelette d'eau supérieure à 150°, le matériau composite comprenant un aérogel de silicium-aluminium-zirconium et un matériau fibreux, dans lequel les composants de l'aérogel de silicium-aluminium-zirconium et les pourcentages en masse des composants sont les suivants: SiO₂ 30%-95%, Al₂O₃ 5%-70%, et le ZrO₂ étant doté d'un pourcentage en masse supérieur à 0 et non supérieur à 10%, **caractérisé en ce que** le procédé comprend les étapes suivantes:
étape S1: préparer un sol d'oxyde d'aluminium, mélanger une source d'aluminium, de l'éthanol, de l'eau déionisée et remuer pour mélanger uniformément afin de former une solution transparente incolore, comme par exemple le sol d'oxyde d'aluminium ;
étape S2: préparer un oxyde de silicium-sol d'oxyde de zirconium, mélanger une source de silicium comprenant au moins un élément parmi l'hexaméthyldisilazane, le triméthylchlorosilane et le fluorosilane, une source de zirconium, de l'éthanol, et de l'eau déionisée, et remuer suffisamment pour mélanger et former une solution transparente incolore, comme par exemple l'oxyde de silicium-sol d'oxyde d'aluminium ;
étape S3: mélanger le sol d'oxyde d'aluminium de l'étape SI avec l'oxyde de silicium-sol d'oxyde d'aluminium de l'étape S2, ajouter de l'oxyde de propylène, remuer pendant 30 à 60 minutes, et mettre de côté pour obtenir un aérogel de silicium-aluminium-zirconium;
étape S4: effectuer un prétraitement de surface sur le matériau fibreux, et immerger le matériau fibreux dans l'aérogel de silicium-aluminium-zirconium, et gélatiniser le sol composite de silicium-aluminium-zirconium dans le mélange à 50-80°C afin d'obtenir un gel composite de silicium-aluminium-zirconium ;
étape S5: faire vieillir à 20-30°C pendant 20-30 heures, et remplacer par de l'éthanol anhydre, retirer le liquide de rebut de réaction, puis placer dans un conteneur à haute pression et sécher à l'éthanol comme milieu de séchage à température de séchage de 240°C-280°C pour obtenir le matériau composite de silicium-aluminium-zirconium.

2. Le procédé selon la revendication 1, dans lequel le matériau fibreux de l'étape S4 est au moins un élément parmi le coton de silicate d'aluminium, la fibre d'oxyde d'aluminium, la fibre de carbone, la fibre de carbure de silicium ou la fibre de carbonitrure de silicium.

3. Le procédé selon la revendication 1, **caractérisé en ce que** la source d'aluminium est au moins un élément parmi les sels d'aluminium tels que le sec-butoxyde d'aluminium, le nitrate d'aluminium ou le sulfate d'aluminium, et l'acétylacétonate d'aluminium.

4. Le procédé selon la revendication 1, **caractérisé en ce que** la source de silicium comprend en outre au moins un élément parmi l'orthosilicate d'éthyle, le sol de silice, le silicate de sodium.

5. Le procédé selon la revendication 1, **caractérisé en ce que** la source de zirconium est de l'oxyde de zirconium ou du chlorure de zirconium.

6. Le procédé selon la revendication 1, **caractérisé en ce que** à l'étape S4, le prétraitement de surface du matériau fibreux est réalisé à l'aide des étapes suivantes: immersion du matériau fibreux dans une solution d'acide hydrochlorique, mélange par ultrasons pendant 0,2-1 heure, retrait, rinçage, vieillissement à 100-120°C pendant 1-5 heures, puis immersion dans une solution de traitement d'agent de couplage silane, mélange par ultrasons pendant 0,5-2 heures, puis traitement thermique à 100-120°C pendant 1-5 heures, refroidissement à température ambiante pour utilisation.

7. Le procédé selon la revendication 6, **caractérisé en ce que** la concentration d'acide hydrochlorique est de 0,3-2 mol/L.
